(19) Europäisches Patentamt
European Patent Office
Office européen des brevets

(11) **EP 2 770 478 B1**

(12) **EUROPEAN PATENT SPECIFICATION**

(45) Date of publication and mention
of the grant of the patent:
**02.10.2019 Bulletin 2019/40**

(51) Int Cl.:
*G06T 5/00* *(2006.01)*    *G06T 3/00* *(2006.01)*

(21) Application number: **14156277.7**

(22) Date of filing: **24.02.2014**

(54) **Image processing unit, imaging device, and vehicle control system and program**

Bildverarbeitungseinheit, Abbildungsvorrichtung und Fahrzeugsteuerungssystem und Programm

Unité de traitement d'image, dispositif d'imagerie et système et programme de commande de véhicule

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.02.2013 JP 2013034556**

(43) Date of publication of application:
**27.08.2014 Bulletin 2014/35**

(73) Proprietor: **Ricoh Company, Ltd.**
**Tokyo 143-8555 (JP)**

(72) Inventors:
• **Kida, Shintaroh**
**Tokyo, 143-8555, (JP)**
• **Takahashi, Yuji**
**Tokyo, 143-8555, (JP)**
• **Morioka, Makoto**
**Tokyo, 143-8555, (JP)**
• **Sekiguchi, Hiroyoshi**
**Tokyo, 143-8555, (JP)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**EP-A1- 2 009 590        WO-A2-03/029757
US-A1- 2005 249 379    US-A1- 2006 125 919
US-A1- 2007 272 884**

• **GORMER S ET AL: "Vision-based rain sensing
with an in-vehicle camera", INTELLIGENT
VEHICLES SYMPOSIUM, 2009 IEEE, IEEE,
PISCATAWAY, NJ, USA, 3 June 2009
(2009-06-03), pages 279-284, XP031489854, ISBN:
978-1-4244-3503-6**

**Description**

The present invention relates to an image processing unit, an imaging device, and vehicle control system and program applicable to an in-vehicle camera which captures an image of the outside of a vehicle through a front glass element such as windshield.

Japanese Patent No. 4326999 (Reference 1) discloses, as a drive assist, imaging the outside of a vehicle with an in-vehicle camera through a windshield, detecting attached matter such as raindrops on the windshield, and controlling the wiper operation or the ejection of washer liquid of the vehicle based on detected information.

Reference 1 further describes setting two areas, i.e., attached matter detection area and vehicle forward area in a captured image. In the attached matter detection area, an optical filter is provided to transmit a light with an infrared wavelength range, for example, to detect attached matter such as raindrops on the windshield. At the same time, in the vehicle forward area an object such as a white line marking ahead of the vehicle is detected.

In Reference 1 the camera includes a lens ahead of an image sensor so that a subject image incident through the lens, such as the raindrops or white line marking ahead of the vehicle, is formed on the image sensor. It is known that due to the optical property of a lens, a distortion occurs in a subject image formed on the image sensor.

It may be not be able to accurately identify an object ahead of the vehicle, for example, white line marking or a preceding vehicle from a captured image including a distortion. Japanese Patent Application Publication No. 2007-189361 (Reference 2) discloses a technique for correcting the distortion of a captured image, for example.

If the distortion correction in Reference 2 is applied to the captured image in Reference 1 having the attached matter detection area and vehicle forward area, the entire captured image including the attached matter detection area and vehicle forward area are evenly subjected to the distortion correction. Distortion needs to be accurately corrected in the vehicle forward area to improve the recognition of a target object while distortion does not need to be corrected in the attached matter detection area for detecting raindrops.

By the distortion correction in Reference 2 to the entire image, a part of the vehicle forward area may be moved and enter the attached matter detection area.

That is, in attached matter detection area brightness signals of optical components in an infrared wavelength range are extracted through the optical filter, as described above. When brightness signals of optical components in the other wavelength range enter the attached matter detection area, an error may occur in the values of brightness signals output therefrom for raindrops detection, decreasing the accuracy of raindrops detection.

EP 2 009 590 A1 discloses a drive assistance device having an imaging device mounted on a vehicle body and imaging a region surrounding the vehicle body, lens distortion correction means for performing lens distortion correction for an inputted image taken by the imaging device, and a display for displaying the image obtained by the lens distortion correcting means. The lens distortion correction means divides the inputted image into multiple regions and performs lens distortion correction for each of the regions with different distortion correction level.

US 2005/0249379 A1 discloses a vehicle periphery viewing apparatus for capturing a vehicle-peripheral image which includes: an image capturing device disposed on predetermined position; a display device disposed within the vehicle; and an image processing device performing an image division of the original image into a first image and a second image. The image capturing device captures an original image from the predetermined position. The display device displays the captured vehicle-peripheral image. The image processing device performs a coordinate conversion into a plan view coordinate by using a geometrical correction for the first image. The image processing device performs a predetermined image synthesis for the first image and the second image. The image processing device displays a synthesized image on the display device.

GORMER S ET AL: "Vision-based rain sensing with an in-vehicle camera", INTELLIGENT VEHICLES SYMPOSIUM, 2009 IEEE, PSCATAWAY, NJ, USA, 2 June 2009 (2009-06-03), pages 279-284, XP031489854, ISBN: 978-1-4244-3503-6 discloses an intelligent wiper speed adjustment system in which a region at the bottom of the field of view of an imager is used to detect raindrops, while the upper part of the image is still usable for other vision-based applications.

US 2006/0125919 A1 discloses a vision system for a vehicle includes an imaging device having an imaging sensor, a camera microcontroller, a display device having a display element, a display microcontroller, and at least one user input selectively actuatable by a user. The imaging device communicates an image signal to the display device via a communication link. The display microcontroller affects the image signal in response to the at least one user input. The camera microcontroller monitors the image signal on the communication link and adjusts a function of the imaging device in response to a detection of the affected image signal. The vision system may adjust a display or sensor of the system in conjunction with a distance detecting system.

WO 03/029757 A2 discloses a system which is configured detect moisture on a surface and includes a sensor that may be divided into a plurality of sub windows.

The present invention aims to provide an image processing unit, an imaging device, and vehicle control system and program which can prevent a decrease in the accuracy with which raindrops are detected in an attached matter detection area due to distortion correction.

The scope of the invention is defined by the appended claims. Any reference to "embodiment(s)", "example(s)" or "aspect(s) of the invention" in this description not falling under the scope of the claims should be interpreted as illustrative example(s) for understanding the invention.

In one embodiment an image processing unit comprises a distortion corrector to correct a distortion of an image of a subject formed on an image sensor via an imaging lens in accordance with an optical property of the imaging lens. The image sensor has a light-receiving surface including a first area and a second area in which images used for first and second purposes are captured, respectively. The distortion corrector is adapted to perform a first distortion correction on an image in the first area, and perform a second distortion correction different from the first distortion correction or perform no distortion correction on an image in the second area.

Features, embodiments, and advantages of the present invention will become apparent from the following detailed description with reference to the accompanying drawings:

FIG. 1 schematically shows the structure of an imaging device incorporating an image processing unit according to one embodiment of the present invention;
FIG. 2 is a schematic block diagram, showing a vehicle control system according to one embodiment incorporating the imaging device in FIG. 1 by way of example;
FIG. 3 shows the entire image area formed on the image sensor via an imaging lens;
FIG. 4 shows one example of an image formed on the image sensor via the imaging lens;
FIG. 5 is a block diagram of the structure of a distortion corrector by way of example;
FIG. 6 shows the light receiving surface of the image sensor and the entire image area captured by an imaging unit in association with each other;
FIG. 7 shows one example of the positions of four source pixels and a destination pixel;
FIG. 8 shows the positions of four source pixels and a destination pixel in detail;
FIG. 9 is a flowchart of the process of distortion correction by a distortion corrector by way of example;
FIG. 10 shows an example of an image having two vertically divided areas;
FIG. 11 shows another example of an image having two vertically divided areas;
FIG. 12 shows an example of an image having three horizontally divided areas;
FIG. 13 shows an example of an image having a divided area at the bottom center;
FIG. 14 shows an example of an image having three vertically divided areas; and
FIG. 15 is a flowchart of the process of distortion correction by a distortion corrector by way of example.

Hereinafter, embodiments of the present invention will be described in detail with reference to the accompanying drawings. Wherever possible, the same reference numbers will be used throughout the drawings to refer to the same or like parts.

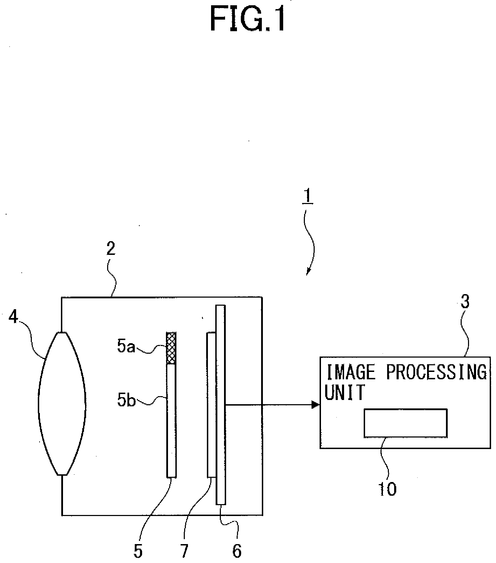

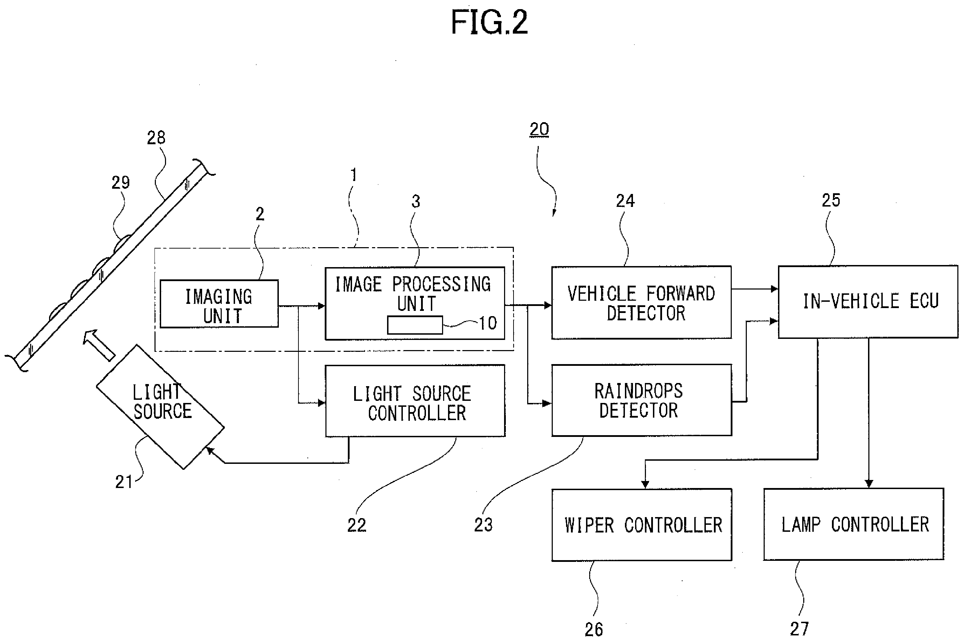

FIG. 1 schematically shows the structure of an imaging device incorporating an image processing unit according to one embodiment of the present invention. FIG. 2 is a schematic block diagram showing a vehicle control system incorporating the imaging device in FIG. 1 by way of example.

Structure of Imaging Device

In FIG. 1 an imaging device 1 comprises an imaging unit 2 and an image processing unit 3.

The imaging unit 2 includes an imaging lens 4, an optical filter 5, and an image sensor 7 such as CCD mounted on a substrate 6. The optical filter 5 includes an area 5a at the top through which only infrared light in a certain infrared wavelength range is transmitted and another area 5b at the bottom through which light in a visible wavelength range is transmitted. Light-receiving elements or pixels are two-dimensionally arranged on the image sensor 7. The imaging lens 4 is comprised of plural lenses although only one lens is shown in FIG. 1.

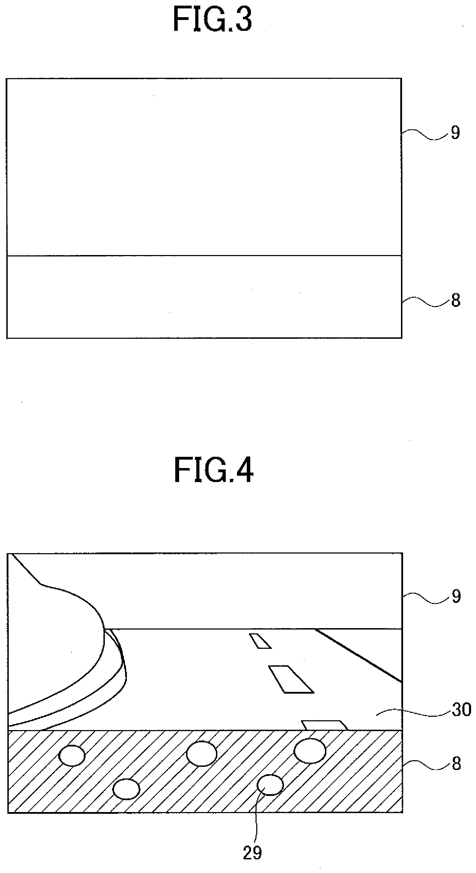

The optical filter 5 is disposed to face the front side of the image sensor 7. The whole area of an image formed on the image sensor 7 via the imaging lens 4 is divided into a raindrops detection area 8 as a second area and a vehicle forward area 9 as a first area, for example. The raindrops detection area through which infrared light transmits corresponds to the top area 5a while the vehicle forward area 9 through which visible light transmits corresponds to the bottom area 5b, as shown in FIG. 3.

Note that the image formed on the image sensor 7 via the imaging lens 4 is an inverted image so that the top area 5a of the optical filter 5 corresponds to the raindrops detection area 8 at the bottom as shown in FIG. 3.

The image sensor 7 converts the image into electric signals and outputs them to the image processing unit 3. The image processing unit 3 performs known signal processing on the electric signals to generate displayable or storable image data.

The image processing unit 3 further comprises a distortion corrector 10 to correct a distortion of generated image data by signal processing, which occurs due to the optical property of the lenses of the imaging lens 4. The structure of the distortion corrector 10 and distortion correction will be described in detail later.

Structure of Vehicle Control System

A vehicle control system 20 according to the present embodiment in FIG. 2 comprises the above-described imaging device 1, a light source 21, a light source controller 22, a raindrops detector 23 as an attached matter detector, a vehicle forward detector 24, an in-vehicle controller (ECU) 25, a wiper controller 26 and a lamp controller 27.

According to the vehicle control system 20 the imaging unit 2 of the imaging device 1 images an area ahead of the vehicle through a windshield 28 as a plate element with an optical permeability, and the image processing unit 3 generates an image including the raindrops detection area 8 and vehicle forward area 9 in FIG. 3. The distortion corrector 10 corrects a distortion of the generated image.

The light source controller 22 controls the light source 21 to project an infrared light beam to the windshield 28 in synchronization with the imaging operation of the imaging device 1. The top area 5a of the optical filter 5 functions to selectively transmit a light with an infrared wavelength range among the light beam from the light source 21. Thereby, with raindrops 29 attached on the surface of the windshield 28, the infrared light beam from the light source 21 is reflected by the raindrops and the reflected light is imaged on the image sensor 7 via the imaging lens 4 and the top area 5a of the optical filter 5.

Meanwhile, the imaging unit 2 of the imaging device 1 images a vehicle forward area through the windshield 28 and forms an image on the image sensor 7 via the imaging lens 4 and the bottom area 5b of the optical filter 5.

FIG. 4 shows an example of an image including a road surface 30 ahead of the vehicle in the vehicle forward area 9 and the raindrops 29 in the raindrops detection area 8 when captured by the imaging device 1 through the windshield 28. Thus, the infrared light beam is irradiated from the light source 21 to the windshield 28, thereby to be able to properly project the image of the raindrops 29 in the raindrops detection area 8, with an influence from sunlight and streetlights reduced.

The raindrops detector 23 receives image data in the raindrops detection area 8 from the imaging device 1 or image processing unit 3. Raindrops can be detected in the following manner by way of example.

When the windshield 28 is irradiated with the infrared light from the light source 21 and imaged by the imaging device 1, with or without the raindrops attached thereon, the brightness of the entire raindrops detection area 8 differs. The larger the amount of raindrops attached on the windshield 28, the higher the brightness value because of an increase in the amount of reflected light by the raindrops. In view of this, thresholds of brightness values are acquired by experiment and stored in a memory in advance. The raindrops detector 23 is configured to detect an attached raindrop according to the brightness value of image data in the entire raindrops detection area 8. When the brightness value exceeds a threshold, it determines that raindrops are attached on the windshield.

Moreover, the vehicle forward detector 24 performs predetermined image processing on the image data in the vehicle forward area 9 input from the imaging device 1 or image processing unit 3 and detects a traffic lane (white line marking) or a preceding vehicle, for example.

Then, the in-vehicle ECU 25 receives detected raindrops information from the raindrops detector 23 and outputs a signal to the wiper controller 26 in accordance with the raindrops information to operate a not-shown wiper to remove the raindrops from the surface of the windshield 28. Alternatively, a washer liquid can be sprayed onto the windshield 28 in replace of the wiper operation.

Further, the in-vehicle ECU 25 receives vehicle forward information including taillights of a preceding vehicle at night from the vehicle forward detector 24 and outputs a signal to the lamp controller 27 in accordance with the information and controls the switching of the taillights between a high beam and a low beam. Alternatively, the in-vehicle ECU 25 can be configured to output a signal to a brake controller to operate the brake when recognizing approaching a preceding vehicle from the vehicle forward information, for example.

Structure of Distortion Corrector 10

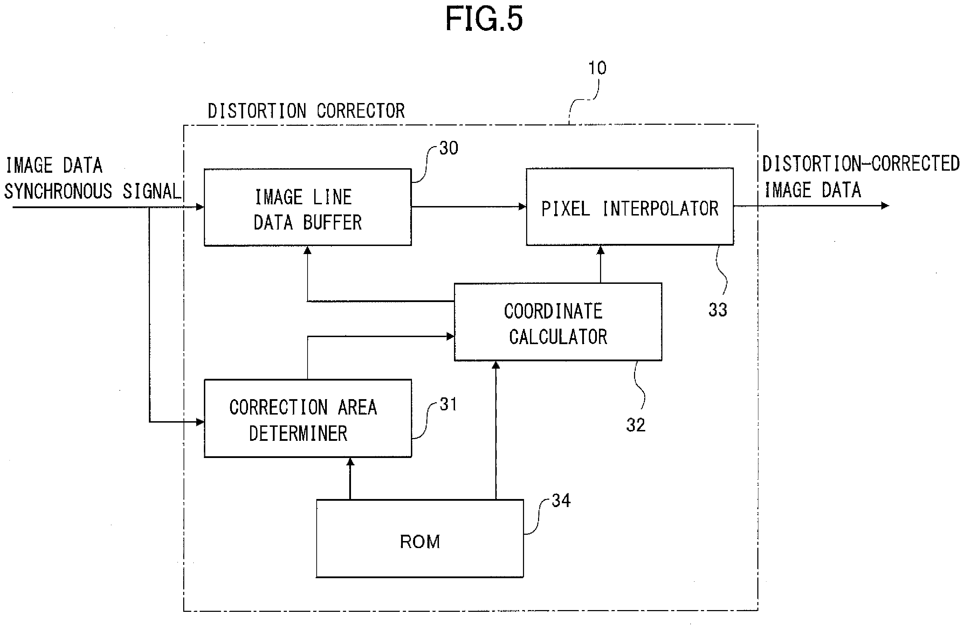

The structure of the distortion corrector 10 is described with reference to FIG. 5. The vehicle forward detector 24 is required to accurately recognize a white line marking or a preceding vehicle ahead of the vehicle so that a distortion of the vehicle forward area 9 of a captured image needs to be accurately corrected.

The distortion corrector 10 in FIG. 5 comprises an image line data buffer 30, a correction area determiner 31, a coordinate calculator 32, a pixel interpolator 33 and a ROM 34 as a storage medium. The ROM 34 contains correction target information including a distortion correction parameter for each image area in line with the property of the imaging lens 4, an area ID for each image area, coordinates (X, Y) in the entire effective image area (coordinates of a base point in the top left of each image area) for each area ID, and the width and height of each image area.

The image line data buffer 30 receives image data and a synchronous signal from the imaging unit 2 and holds a necessary number of lines of pixel data for distortion correction in a ring buffer format. It outputs four neighboring pixel data to the pixel interpolator 33 according to a buffer address designated by the coordinate calculator 32. The four neighboring pixels are the pixel designated by the buffer address and three neighboring pixels to the right, below, and obliquely right downward.

The correction area determiner 31 calculates coordinates of a current image in accordance with a synchronous signal from the imaging unit 2 and compares them with the correction target information from the ROM 34, to determine whether the pixel in question is a target pixel to be distortion-corrected. It then outputs an area ID, a correction valid signal indicating a target or not of distortion correction, and a synchronous signal to the coordinate calculator 32.

The coordinate calculator 32 then reads a distortion correction parameter from the ROM 34 to calculate coordinates for distortion correction. It calculates pixel coordinates after distortion correction relative to a pixel position before distortion correction as an address of the line data buffer expressed in unit of a pixel (integer value) and a sub-pixel accurate brightness correction amount. Also, it outputs, for each pixel of each image area, an address of the image line data buffer 30 to be a target of correction and a correction amount for calculating a brightness at sub-pixel accuracy, in accordance with the area ID, correction valid signal, and synchronous signal from the correction area determiner 31. That is, the coordinate calculator 32 reads the distortion correction parameter from the storage medium and outputs an address, expressed in unit of a pixel, of the image line data buffer specified by the distortion correction parameter and an interpolation value for a distortion correction amount of less than the unit of a pixel based on the address. The interpolation value is an X correction amount in a horizontal direction of the image and a Y correction amount in a vertical direction of the image.

The coordinate calculator 32 designates a pixel data address as a reference to a source pixel to be moved for distortion correction, to control a read of the image line data buffer 30 and outputs an interpolation value to the pixel interpolator 33 as an X correction amount in image horizontal direction and a Y correction amount in image vertical direction. The interpolation value is an intermediate value among the four-pixel data and corresponds to a distortion correction amount of less than unit of a pixel.

The pixel interpolator 33 receives the four-pixel data read from the image line data buffer 30 and the interpolation value from the coordinate calculator 32 to calculate a value of a destination pixel by bilinear interpolation.

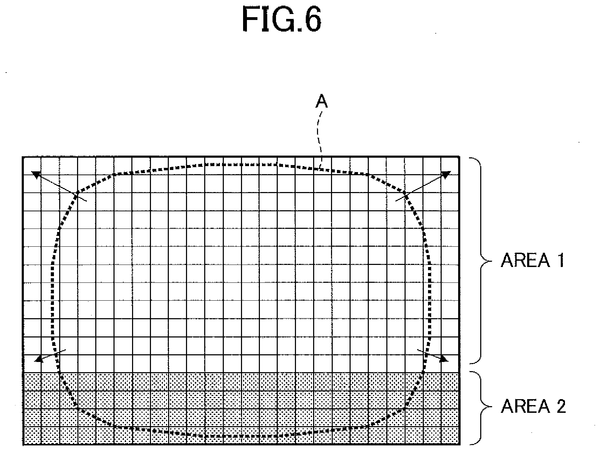

FIG. 6 shows the entire image area captured by the imaging unit 2, which corresponds to the light-receiving surface of the image sensor 7 on which the pixels are arranged. A subject image including a distortion is formed on the light receiving surface.

In FIG. 6 an area 1 corresponds to the vehicle forward area 9 as a first area while an area 2 corresponds to the raindrops detection area 8 as a second area. An area A surrounded by a broken line is the outermost area of the image in which a distortion occurs. The outermost area of an ideal image free from a distortion is located on the outermost pixels of the light receiving surface. The arrows in the drawing indicate a direction in which a brightness value is moved by distortion correction. In FIG. 6 distortion correction is performed only on the area 1 corresponding to the vehicle forward area 9.

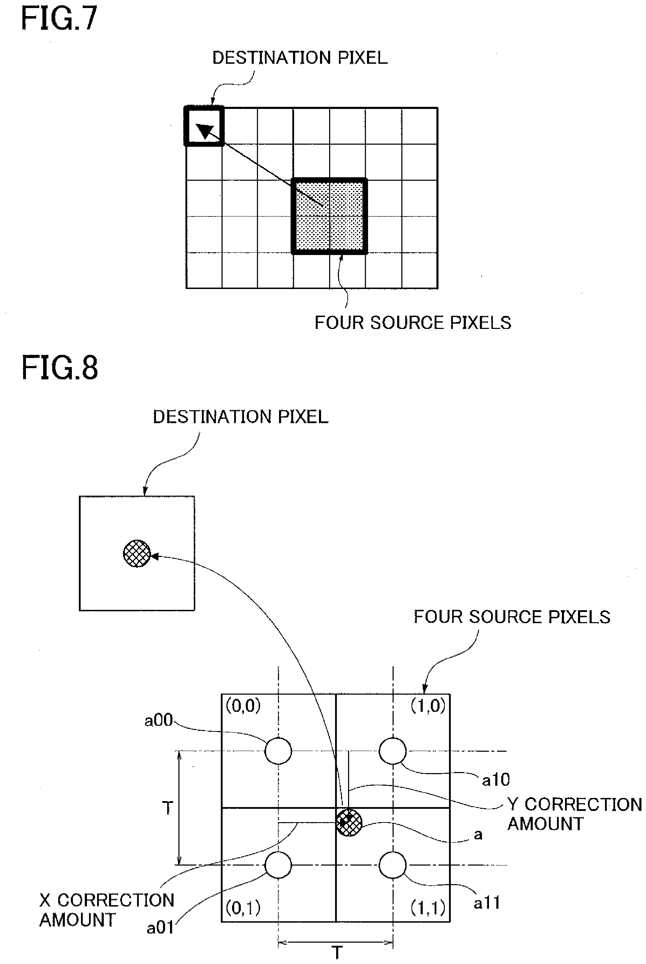

FIG. 7 shows the positions of the four source pixels or target pixels to be distortion-corrected and a destination pixel in the top left area of the image area in FIG. 6, for example. It shows that the brightness value calculated at sub-pixel accuracy is moved from the brightness values of the four source pixels.

FIG. 8 shows the positions of the four source pixels as a target of correction and the destination pixel in FIG. 7 in detail and the pixel interpolation process of the pixel interpolator 33.

That is, in FIG. 8 the pixel interpolator 33 reads the four source-pixel data from the image line data buffer 30 and applies, by bilinear interpolation, the intermediate value thereof to a value of a destination pixel as a sub-pixel correction amount which is the X correction amount in image horizontal direction and the Y correction amount in image vertical direction.

The interpolation value for the bilinear interpolation of a destination pixel value is calculated in the following manner.

Assumed that an address designated by the coordinate calculator 32 falls at (0, 0) in the upper left of the four source-pixel data, a pixel value (a) (in FIG. 8) after distortion correction is expressed by the following equation:

$$\text{Pixel value (a)} = ((T-\Delta Y) * A + \Delta Y * B)/T$$

where

$$A = ((T-\Delta X) * a00 + \Delta X * a10)/T$$

$$B = ((T-\Delta X) * a01 + \Delta X * a11)/T$$

$$\text{At } (0,0) \text{ pixel value} = a00$$

$$\text{At } (1,0) \text{ pixel value} = a10$$

$$\text{At } (0,1) \text{ pixel value} = a01$$

$$\text{At } (1,1) \text{ pixel value} = a11$$

$$X \text{ correction amount (after the decimal point)} = \Delta X$$

$$Y \text{ correction amount (after the decimal point)} = \Delta Y$$

$$\text{Resolution of a component less than a pixel} = T$$

When not performing distortion correction after a predetermined line in FIG. 8, the pixel address same as that before distortion correction is read and the X and Y correction amounts of zero are given by the coordinate calculator 32. Thereby, a not-corrected source-pixel value is output.

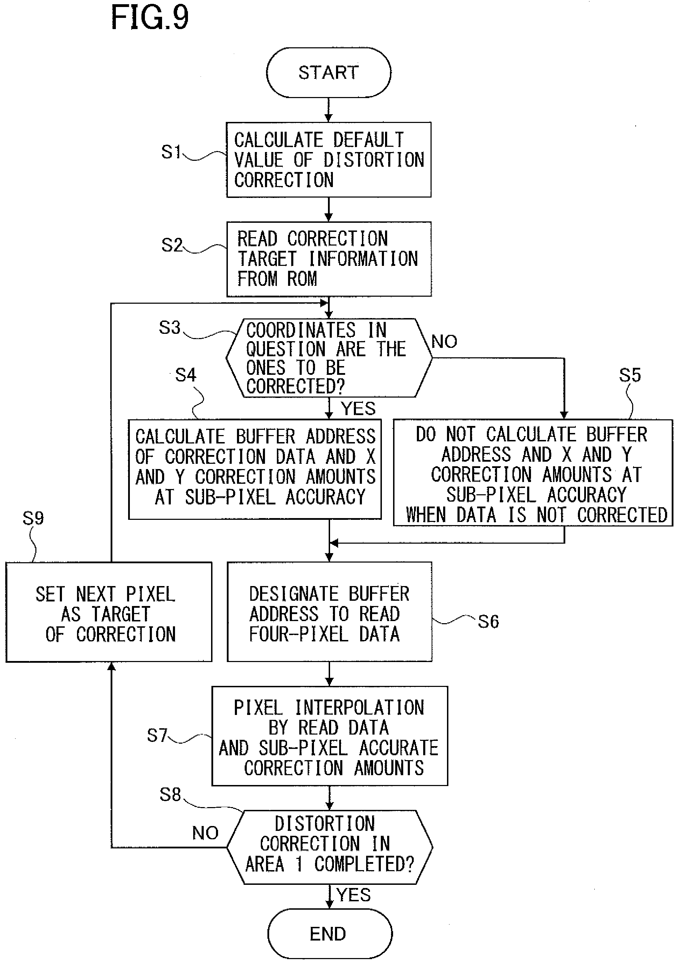

Next, the distortion correction process of the distortion corrector 10 is described in detail with reference to FIG. 9 by way of example. In FIG. 9 the image is divided into the area 1 corresponding to the vehicle forward area 9 and the area 2 corresponding to the raindrops detection area 8 as shown in FIG. 6. Only the area 1 or vehicle forward area 9 is subjected to the distortion correction.

In step S1 when the distortion corrector 10 starts performing distortion correction, the coordinate calculator 32 reads a distortion correction parameter for each image area from the ROM 34 and calculates a default value for calculation of coordinates for distortion correction according to the read parameter.

In step S2 the correction area determiner 31 reads from the ROM 34 the correction target information including coordinates (X, Y) of a base point corresponding to the area 1 or vehicle forward area 9 and the width and height of the image area.

In step S3 the correction area determiner 31 calculates the coordinates of a current image according to the synchronous signal from the imaging unit 2 and compares them with the correction target information read from the ROM 34 to determine whether or not the coordinates or pixel in question is the one to be distortion-corrected. If the coordinates are determined to be a target of distortion correction (YES in step S3), the coordinate calculator 32 calculates a buffer address of correction data and X and Y correction amounts at sub-pixel accuracy in step S4.

With the coordinates determined as not a target of distortion correction (NO in step S3), the coordinate calculator 32 does not calculate a buffer address and the sub-pixel accurate X and Y correction amounts in step S5 when the data in question is not to be corrected.

In step S6 the image line data buffer 30 designates the buffer address to read the four source-pixel data. In step S7 the pixel interpolator 33 performs the above-described pixel interpolation on the basis of the data read in step S6 and the sub-pixel accurate X and Y correction amounts calculated in step S4.

Upon completion of the distortion correction by the pixel interpolation in the area 1(YES in step S8), a series of distortion correction process is ended. When the distortion correction process is not finished (NO in step S8), a next pixel is set to be a target of distortion correction in step S9 and subjected to the operation in steps S3 to S7.

Thus, regarding the image having the two divided areas 1 and 2 corresponding to the vehicle forward area 9 and raindrops detection area 8, an object in the area 1 or vehicle forward area 9 needs to be precisely recognized. According to the present embodiment, only the area 1 is subjected to the distortion correction so that it is possible to prevent a part of the area 1 from entering the area 2.

That is, the brightness signal of an optical component in a wavelength range other than the infrared wavelength range, which should be incident on the area 1, can be prevented from entering a part of the area 2 (raindrops detection area 8) in which the brightness signal of an optical component in the infrared wavelength range is extracted through the top area 5a of the optical filter 5. This makes it possible to stably, accurately detect raindrops and prevent a decrease in the detection accuracy.

In the distortion correction in FIG. 9 the area 2 is not subjected to the distortion correction as shown in FIG. 6. Alternatively, it can be configured that distortion correction is performed on plural divided areas with respective different correction amounts.

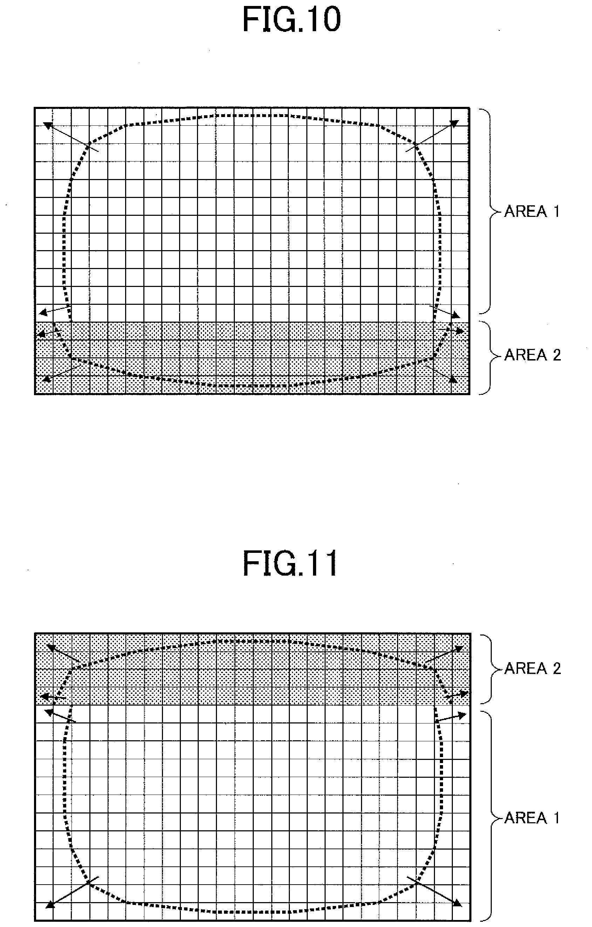

Referring to FIG. 10, for example, a captured image include two vertically divided areas 1 and 2 corresponding to the vehicle forward area 9 and raindrops detection area 8, and these divided areas 1 and 2 are subjected to distortion correction at different correction amounts. FIG. 11 shows an example of a captured image having the areas 1 and 2 arranged reversely. The area 2 corresponding to the raindrops detection area 8 is placed at top of the image and the area 1 corresponding to the vehicle forward area 9 is placed at bottom. The areas 1 and 2 are subjected to distortion correction with different correction amounts.

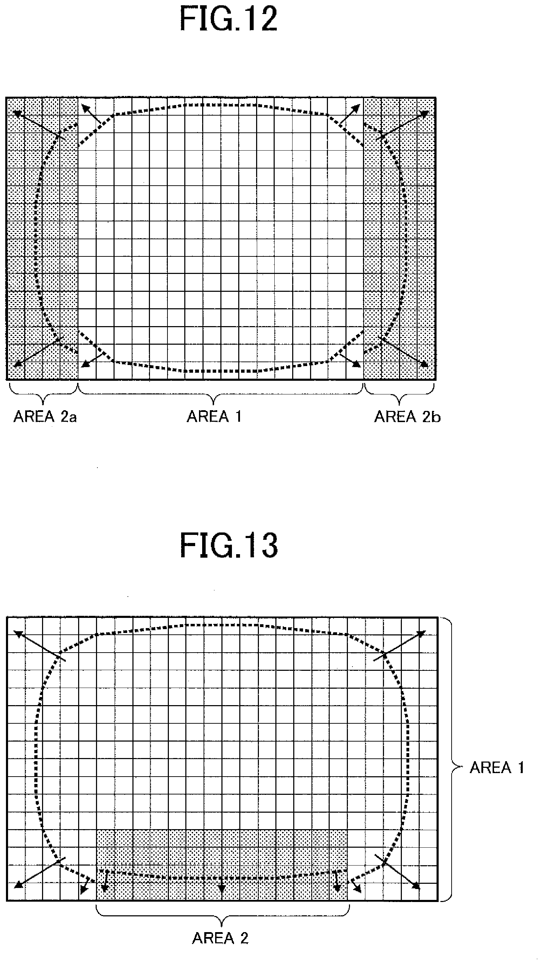

Further, FIG. 12 shows another example of a captured image having three horizontally divided areas, an area 1 at the center corresponding to the vehicle forward area 9 and right and left areas 2a, 2b corresponding to the raindrops detection area 8. The areas 1 and 2a and 2b are subjected to distortion correction with different correction amounts. The correction amounts applied to the second areas 2a, 2b can be same or different.

FIG. 13 shows another example of a captured image having an area 1 corresponding to the vehicle forward area 9 and an area 2 corresponding to the raindrops detection area 8 at bottom center. The areas 1 and 2 are subjected to distortion correction with different correction amounts.

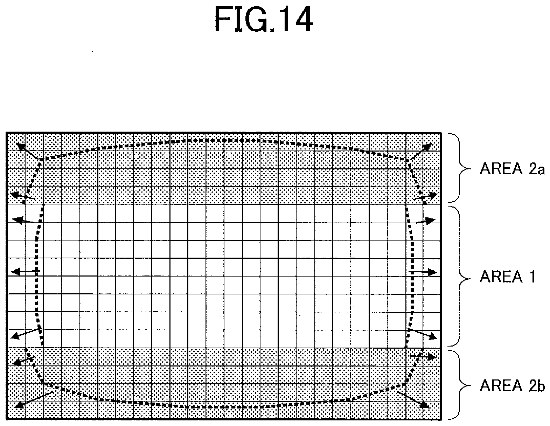

Further, FIG. 14 shows another example of a captured image having three vertically divided areas, an area 1 at the center corresponding to the vehicle forward area 9 and top and bottom areas 2a, 2b corresponding to the raindrops detection area 8. The areas 1, 2a, and 2b are subjected to distortion correction with different correction amounts. The correction amounts applied to the second areas 2a, 2b can be same or different,

In FIG. 10 to FIG. 14 the areas of the light receiving surface surrounded by the broken line are the outermost areas of images in which a distortion occurs. The outermost area of an ideal image free from a distortion is located on the outermost pixels of the light receiving surface. The arrows in the drawings indicate a direction in which a brightness value is moved by distortion correction.

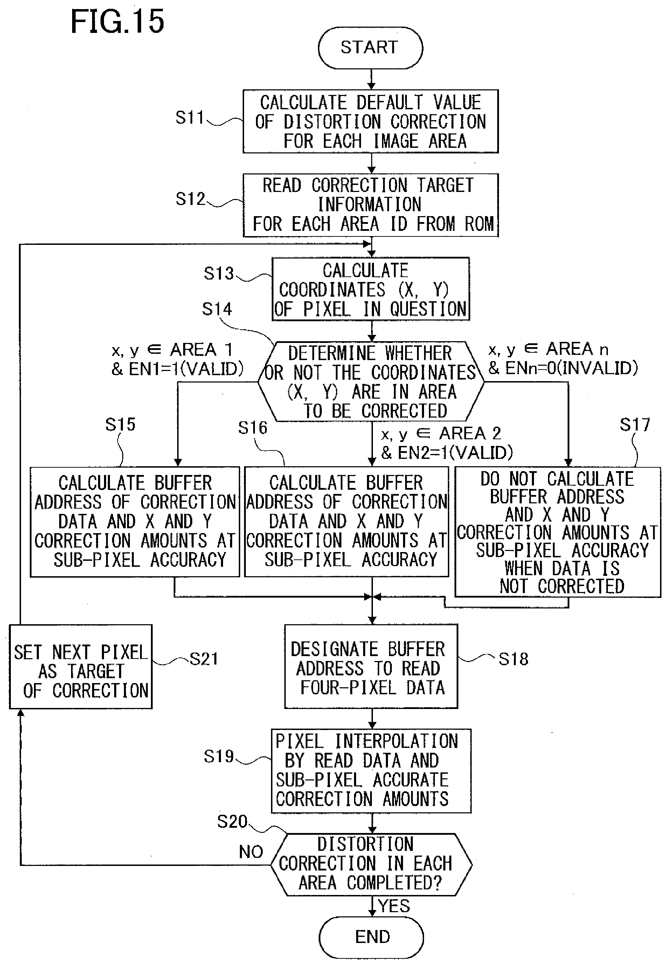

Next, referring to FIG. 15, the distortion correction to the divided image areas with different correction amounts is described in detail.

First, in step S11 when the distortion corrector 10 starts performing distortion correction, the coordinate calculator 32 reads a distortion correction parameter for each image area from the ROM 34 and calculates a default value for calculation of coordinates for distortion correction according to the read parameter.

In step S12 the correction area determiner 31 reads from the ROM 34 the correction target information including a correction flag for each area ID (1 to n), coordinates (X, Y) of a base point and the width and height of the image area.

In step S13 the coordinate calculator 32 calculates the coordinates (X, Y) of a current image captured in accordance with the synchronous signal from the imaging unit 2, calculates coordinates (X, Y) of a target pixel according to the correction target information read from the ROM 34, and determines whether or not the coordinates (X, Y) are in an area to be distortion-corrected in step S14.

For the determining in step S14 the following three relations are used.

$$Xn \leq X < (Xn + Wn)$$

$$Yn \leq Y < (Yn + Hn)$$

ENn: correction flag for indicating validity of correction of area n
where Xn is an X coordinate of a base point of area n, Yn is a Y coordinate of a base point of area n, Wn is a width of area n, and Hn is a height of area n.

When determining that the coordinates (X, Y) are in the area 1 (in FIG. 10, for example) and EN1 = 1 (correction is valid) in step S14 by the three relations, the coordinate calculator 32 proceeds to step S15 and calculates a buffer address of correction data and X and Y correction amounts at sub-pixel accuracy. The calculated X and Y correction amounts depend on a correction parameter for the area 1.

Further, when determining that the coordinates (X, Y) are in the area 2 (in FIG. 10, for example) by the three relations and EN2 = 1 (correction is valid) in step S14, the coordinate calculator 32 proceeds to step S16 and calculates a buffer address of data to be corrected and sub-pixel accurate X and Y correction amounts. The calculated X and Y correction amounts depend on the correction parameter for the area 2.

When determining that the coordinates (X, Y) are in an area n as a non-target of distortion correction and ENn = 0 (correction is invalid) by the three relations in step S14, the coordinate calculator 32 proceeds to step S17 and does not calculate a buffer address and sub-pixel accurate X and Y correction amounts when the data in question is not to be corrected.

In step S18 the image line data buffer 30 reads the four source-pixel data designated by the buffer address on the basis of the results in steps S15 and S16. In step S19 the pixel interpolator 33 interpolates the pixel in question on the basis of the data read in step S18 and the sub-pixel accurate X and Y correction amounts calculated in steps S15 and S16.

Upon completion of the distortion correction by the pixel interpolation (YES in step S20) in each area, the series of distortion correction process is ended. When the distortion correction process is not finished (NO in step S20), a next pixel is set to be a target of distortion correction in step S21 and subjected to the operations in steps S13 to S19.

Thus, having the areas 1 and 2, the two divided areas 1 and 2 of the image corresponding to the vehicle forward area 9 and raindrops detection area 8 can be subjected to the distortion correction with different correction amounts. Also, the number of the areas 2 can be two or more such as the areas 2a, 2b in FIGs. 12, 14.

As described above, the brightness signal of an optical component in a wavelength range other than the infrared wavelength range, which should be incident on the area 1 (vehicle forward area 9), can be prevented from entering a part of the area 2 (raindrops detection area 8) in which brightness of an optical component in the infrared wavelength range is extracted through the top area 5a of the optical filter 5. This makes it possible to stably, accurately detect raindrops and prevent a decrease in the detection accuracy.

According to the present embodiment the vehicle control system 20 is configured to detect the raindrops attached on the windshield 28 from the area 2 of an image by the imaging unit 2 of the imaging device 1. Alternatively, it can be configured to detect a fog on the inner surface of the windshield or a frost or smudge on the outer surface thereof.

Further, according to the present embodiment software or a program for causing a computer to execute the distortion correction by the distortion corrector 10 shown in either or both of FIG. 9 and FIG. 15 can be provided. Such software or program can be supplied to the imaging device 1 or vehicle control system 20 via a network or various kinds of storage medium. A CPU of a computer in the imaging device 1 or vehicle control system 20 can read and execute the program.

As described above, according to the present invention an image in the first area is subjected to a first distortion correction while an image in the second area is not subjected to a distortion correction or subjected to a second distortion correction different from the first distortion correction to avoid the second area from being affected by the first distortion correction. This makes it possible to avoid a decrease in the accuracy at which attached matter including raindrops is detected due to the optical property of an imaging lens.

**Claims**

1.  A vehicle control system (20) comprising,
    an imaging unit (2) disposed inside a plate element (28) having a light permeability and including an image sensor (7) on which light-receiving elements are two-dimensionally arranged and an imaging lens (4) to capture an image of a subject on the image sensor through the plate element (28);
    a distortion corrector (10) to correct a distortion of the image captured by the image unit (2) in accordance with an optical property of the imaging lens (4);
    a light source (21) to project a light in the infrared wavelength range to the plate element from the side of the imaging unit (2);
    an optical filter (5) provided between the image lens (4) and the image sensor (7) and including a partial area through which only the light in the infrared wavelength range is transmitted and a partial area through which only light in visible wavelength range but not the infrared wavelength range is transmitted;
    a forward area detector (24) to recognize an object in an area ahead of a vehicle from the image; and
    an attached matter detector (23) to detect attached matter on the plate element (28) of the object from the image,
    **characterized in that**
    the image sensor has a light-receiving surface including a first area (9) to extract a brightness signal of a light component in a visible wavelength range but not the infrared wavelength range and a second area (8) to extract a brightness signal of a light component in the infrared wavelength range through the optical filter (5);
    the distortion corrector (10) is adapted to perform a distortion correction on an image in the first area, and perform no distortion correction on an image in the second area; and
    the forward area detector is adapted to recognize the object in the area ahead of the vehicle from the image in the first area;
    the attached matter detector is adapted to detect attached matter on the plate element (28) with the image in the second area.

2. The control system (20) according to the preceding claim, wherein the image sensor (7) has a light-receiving surface including a first area (9) in which an image of an area ahead of the vehicle outside the plate element is captured via the imaging lens and a second area (8) in which an image of attached matter on the plate element is captured via the imaging lens.

3. The control system (20) according to claim 2,
wherein
the second area (8) is an area on which the light from the light source is reflected by the plate element and incident through the partial area of the optical filter.

4. The control system (20) according to any one of claims 2 to 3, wherein
the second area (8) includes a single area or a plurality of divided areas.

5. The control system (20) according to any one of the preceding claims, comprising:
a controller (25) to control a predetermined operation of the vehicle on the basis of forward area information obtained by the forward area detector (24) and control a wiper operation or an ejection of washer liquid on the basis of attached matter information obtained by the attached matter detector (23) when the attached matter is detected.

**Patentansprüche**

1. Fahrzeugsteuerungssystem (20), umfassend:

eine Bildgebungseinheit (2), die in einem Plattenelement (28) mit einer Lichtdurchlässigkeit angeordnet ist und einen Bildsensor (7), an dem Lichtempfangselemente zweidimensional angeordnet sind, und eine Bildgebungslinse (4) umfasst, um ein Bild eines Subjekts auf dem Bildgebungssensor durch das Plattenelement (28) aufzunehmen;
einen Verzerrungsregler (10), um eine Verzerrung des Bildes, das von der Bildgebungseinheit (2) aufgenommen wurde, in Übereinstimmung mit einer optischen Eigenschaft der Bildgebungslinse (4) zu korrigieren;
eine Lichtquelle (21), um ein Licht in dem Infrarotwellenlängenbereich von der Seite der Bildgebungseinheit (2) auf das Plattenelement zu projizieren;
einen optischen Filter (5), der zwischen der Bildlinse (4) und dem Bildsensor (7) bereitgestellt ist und einen Teilbereich, durch den nur das Licht im Infrarotwellenbereich übertragen wird und einen Teilbereich, durch den nur Licht im sichtbaren Wellenlängenbereich, aber nicht im Infrarotwellenlängenbereich übertragen wird, umfasst;
einen Vorwärts-Bereich-Detektor (24), um ein Objekt in einem Bereich vor einem Fahrzeug von dem Bild zu erkennen; und
einen Befestigte-Materie-Detektor (23), um befestigte Materie an dem Plattenelement (28) des Objekts von dem Bild zu erfassen,
**dadurch gekennzeichnet, dass**
der Bildsensor eine Lichtempfangsfläche hat einschließlich eines ersten Bereichs (9), um ein Helligkeitssignal von einer Lichtkomponente in einem sichtbaren Wellenlängenbereich, aber nicht im Infrarotwellenlängenbereich zu extrahieren und eines zweiten Bereichs (8), um ein Helligkeitssignal von einer Lichtkomponente in dem Infrarotwellenlängenbereich durch den optischen Filter (5) zu extrahieren;
der Verzerrungsregler (10) angepasst ist, um eine Verzerrungskorrektur an einem Bild in dem ersten Bereich durchzuführen und keine Verzerrungskorrektur an einem Bild in dem zweiten Bereich durchzuführen; und
der Vorwärts-Bereich-Detektor angepasst ist, um das Objekt in dem Bereich vor dem Fahrzeug von dem Bild in dem ersten Bereich zu erkennen;
der Befestigte-Materie-Detektor angepasst ist, um befestigte Materie an dem Plattenelement (28) mit dem Bild in dem zweiten Bereich zu erfassen.

2. Steuerungssystem (20) nach dem vorangehenden Anspruch, wobei der Bildsensor (7) eine Lichtempfangsfläche hat einschließlich eines ersten Bereichs (9), in dem ein Bild eines Bereichs vor dem Fahrzeug außerhalb des Plattenelements über die Bildgebungslinse aufgenommen wird und eines zweiten Bereichs (8), in dem ein Bild von befestigter Materie an dem Plattenelement über die Bildgebungslinse aufgenommen wird.

**3.** Steuerungssystem (20) nach Anspruch 2, wobei
der zweite Bereich (8) ein Bereich ist, auf den das Licht von der Lichtquelle durch das Plattenelement reflektiert wird und durch den Teilbereich des optischen Filters einfällt.

**4.** Steuerungssystem (20) nach einem der Ansprüche 2 bis 3, wobei
der zweite Bereich (8) einen einzelnen Bereich oder eine Vielzahl aufgeteilter Bereiche umfasst.

**5.** Steuerungssystem (20) nach einem der vorangehenden Ansprüche, umfassend:
eine Steuerung (25), um eine festgelegte Bedienung des Fahrzeugs zu steuern, basierend auf Vorwärts-Bereich-Informationen, die von dem Vorwärts-Bereich-Detektor (24) erhalten werden, und um eine Scheibenwischerbedienung oder einen Ausstoß von Scheibenwaschflüssigkeit zu steuern, basierend auf Befestigte-Materie-Informationen, die von dem Befestigte-Materie-Detektor (23) erhalten werden, wenn die befestigte Materie erfasst wird.

**Revendications**

**1.** Système de commande de véhicule (20), comprenant :

une unité d'imagerie (2) disposée à l'intérieur d'un élément de plaque (28) ayant une perméabilité à la lumière et comprenant un capteur d'image (7) sur lequel des éléments récepteurs de lumières sont agencés bidimensionnellement et une lentille d'imagerie (4) pour capturer une image d'un sujet sur le capteur d'image à travers l'élément de plaque (28) ;
un correcteur de distorsion (10) pour corriger une distorsion de l'image capturée par l'unité d'imagerie (2) en conformité avec une propriété optique de la lentille d'imagerie (4) ;
une source de lumière (21) pour projeter une lumière dans la plage de longueurs d'onde infrarouge vers l'élément de plaque depuis le côté de l'unité d'imagerie (2) ;
une filtre optique (5) prévu entre la lentille d'image (4) et le capteur d'image (7) et comprenant une zone partielle à travers laquelle seule la lumière dans la plage de longueurs d'onde infrarouge est transmise et une zone partielle à travers laquelle seule la lumière dans la plage de longueurs d'onde visibles, mais pas la plage de longueurs d'onde infrarouge est transmise ;
un détecteur de zone avant (24) pour reconnaître un objet dans une zone devant un véhicule à partir de l'image ; et
un détecteur de matière attachée (23) pour détecter la matière attachée sur l'élément de plaque (28) de l'objet à partir de l'image,
**caractérisé en ce que**
le capteur d'image possède une surface réceptrice de lumière comprenant une première zone (9) pour extraire un signal de luminosité d'une composante de lumière dans une plage de longueurs d'onde visibles, mais pas dans la plage de longueurs d'onde infrarouge et une deuxième zone (8) pour extraire un signal de luminosité d'une composante de lumière dans la plage de longueurs d'onde infrarouge à travers le filtre optique (5) ;
le correcteur de distorsion (10) est adapté pour effectuer une correction de distorsion sur une image dans la première zone, et pour effectuer une correction de distorsion sur une image dans la deuxième zone ; et
le détecteur de zone avant est adapté pour reconnaître l'objet dans la zone devant le véhicule à partir de l'image dans la première zone ;
le détecteur de matière attachée est adapté pour reconnaître de la matière attachée sur l'élément de plaque (28) avec l'image dans la deuxième zone.

**2.** Système de commande (20) selon la revendication précédente, dans lequel le capteur d'image (7) possède une surface réceptrice de lumière comprenant une première zone (9) dans laquelle une image d'une zone devant le véhicule à l'extérieur de l'élément de plaque est capturée via la lentille d'imagerie et une deuxième zone (8) dans laquelle une image de matière attachée sur l'élément de plaque est capturée via la lentille d'imagerie.

**3.** Système de commande (20) selon la revendication 2, dans lequel
la deuxième zone (8) est une zone sur laquelle la lumière provenant de la source de lumière est réfléchie par l'élément de plaque et incidente à travers la zone partielle du filtre optique.

**4.** Système de commande (20) selon l'une quelconque des revendications 2 à 3, dans lequel la deuxième zone (8) comprend une zone unique ou une pluralité de zones divisées.

**5.** Système de commande (20) selon l'une quelconque des revendications précédentes, comprenant :

un dispositif de commande (25) pour commander un fonctionnement prédéterminé du véhicule sur la base d'informations de zone avant obtenues par le détecteur de zone avant (24) et pour commander un fonctionnement d'essuie-glace ou une éjection de liquide de lavage sur la base d'informations de matière attachée obtenues par le détecteur de matière attachée (23) lorsque la matière attachée est détectée.

# FIG.1

IMAGE PROCESSING UNIT

# FIG.2

# FIG.3

# FIG.4

## FIG.5

DISTORTION CORRECTOR  10

IMAGE DATA  
SYNCHRONOUS SIGNAL

IMAGE LINE DATA BUFFER  30

PIXEL INTERPOLATOR  33

COORDINATE CALCULATOR  32

CORRECTION AREA DETERMINER  31

ROM  34

DISTORTION-CORRECTED IMAGE DATA

# FIG.6

# FIG.7

DESTINATION PIXEL

FOUR SOURCE PIXELS

# FIG.8

DESTINATION PIXEL

FOUR SOURCE PIXELS

a00

$a10$

Y CORRECTION AMOUNT

$a$

(0,0)

(1,0)

$T$

X CORRECTION AMOUNT

a01

(0,1)

(1,1)

$a11$

$T$

# FIG.9

```
                    START

S1  CALCULATE DEFAULT
    VALUE OF DISTORTION
    CORRECTION

S2  READ CORRECTION
    TARGET INFORMATION
    FROM ROM

S3  COORDINATES IN
    QUESTION ARE THE        NO
    ONES TO BE
    CORRECTED?

           YES

S4  CALCULATE BUFFER ADDRESS    S5  DO NOT CALCULATE BUFFER
    OF CORRECTION DATA AND X         ADDRESS AND X AND Y
    AND Y CORRECTION AMOUNTS          CORRECTION AMOUNTS AT
    AT SUB-PIXEL ACCURACY             SUB-PIXEL ACCURACY
                                      WHEN DATA IS NOT CORRECTED

S9  SET NEXT PIXEL          DESIGNATE BUFFER
    AS TARGET               ADDRESS TO READ      S6
    OF CORRECTION           FOUR-PIXEL DATA

                           S7  PIXEL INTERPOLATION
                               BY READ DATA
                               AND SUB-PIXEL ACCURATE
                               CORRECTION AMOUNTS

                    S8  DISTORTION
              NO        CORRECTION IN
                        AREA 1 COMPLETED?

                           YES

                           END
```

# FIG.10

# FIG.11

# FIG.12

AREA 2a       AREA 1       AREA 2b

# FIG.13

AREA 1

AREA 2

# FIG.14

AREA 2a

AREA 1

AREA 2b

# FIG.15

START

S11 — CALCULATE DEFAULT VALUE OF DISTORTION CORRECTION FOR EACH IMAGE AREA

S12 — READ CORRECTION TARGET INFORMATION FOR EACH AREA ID FROM ROM

S13 — CALCULATE COORDINATES (X, Y) OF PIXEL IN QUESTION

S14 — DETERMINE WHETHER OR NOT THE COORDINATES (X, Y) ARE IN AREA TO BE CORRECTED

x, y ∈ AREA 1 & EN1=1(VALID)

x, y ∈ AREA n & ENn=0(INVALID)

x, y ∈ AREA 2 & EN2=1(VALID)

S15 — CALCULATE BUFFER ADDRESS OF CORRECTION DATA AND X AND Y CORRECTION AMOUNTS AT SUB-PIXEL ACCURACY

S16 — CALCULATE BUFFER ADDRESS OF CORRECTION DATA AND X AND Y CORRECTION AMOUNTS AT SUB-PIXEL ACCURACY

S17 — DO NOT CALCULATE BUFFER ADDRESS AND X AND Y CORRECTION AMOUNTS AT SUB-PIXEL ACCURACY WHEN DATA IS NOT CORRECTED

SET NEXT PIXEL AS TARGET OF CORRECTION — S21

DESIGNATE BUFFER ADDRESS TO READ FOUR-PIXEL DATA — S18

S19 — PIXEL INTERPOLATION BY READ DATA AND SUB-PIXEL ACCURATE CORRECTION AMOUNTS

S20 — DISTORTION CORRECTION IN EACH AREA COMPLETED?

NO

YES

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4326999 B
- JP 2007189361 A
- EP 2009590 A1
- US 20050249379 A1
- US 20060125919 A1
- WO 03029757 A2

**Non-patent literature cited in the description**

- Vision-based rain sensing with an in-vehicle camera. **GORMER S et al.** INTELLIGENT VEHICLES SYMPOSIUM. IEEE, 02 June 2009, 279-284